# FASCICULE DE BREVET EUROPEEN

(11) **EP 2 598 259 B1**
(45) Date de publication et mention de la délivrance du brevet: **16.12.2015**
(21) Numéro de dépôt: 11752287.0
(22) Date de dépôt: 25.07.2011
(51) Int. Cl.: B09B 3/00, B27B 3/00, B29B 17/02

(54) **PROCÉDÉ D'ASSAINISSEMENT DE MATÉRIAUX ISSUS DU RECYCLAGE DE MEUBLES, NOTAMMENT DE MATELAS, DE SOMMIERS ET DE SIÈGES**
VERFAHREN ZUR WIEDERVERWERTUNG VON MATERIALIEN AUS MÖBELN, INSBESONDERE MATRATZEN, BETTRAHMEN UND SITZE.
PROCESS FOR RECYCLING MATERIALS FROM FURNITURE, IN PARTICULAR MATTRESSES, BED BASES AND SEATS

(30) Priorité: 29.07.2010 FR 1056250
(43) Date de publication de la demande: 05.06.2013
(73) Titulaire: Ecoval Environnement, 77185 Lognes (FR)
(72) Inventeur: LANZA, Rémy, F-84500 Bollene (FR); TOUATI, Salim, F-26250 Livron Sur Drome (FR)
(74) Mandataire: Thinat, Michel
(86) Numéro de dépôt international: PCT/FR2011/051786
(87) Numéro de publication internationale: WO 2012/022883

(56) Documents cités:
- WO-A1-01/39946
- DE-A1- 4 224 629
- DE-A1- 19 702 075
- DE-A1-102008 057 557

## Description

La présente invention concerne en général le domaine du meuble.

Plus précisément, l'invention concerne un procédé d'assainissement de matériaux issus du recyclage de meubles, notamment de matelas, de sommiers et de sièges.

Les meubles en fin de vie, notamment les matelas et les sommiers, sont aujourd'hui mis en décharge ou incinérés. Ces solutions ne sont pas satisfaisantes du point de vue écologique. Les meubles, matelas et sommiers en fin de vie représentent chaque année un flux très important. Ils sont constitués de matériaux très différents les uns des autres, comme l'acier, le bois, les textiles, les mousses de polyuréthane, le latex etc. L'incinération de ces matériaux entraîne des rejets de gaz, dont certains peuvent être toxiques. Quand ils sont mis en décharge, les matelas et les sommiers occupent un volume important et sont mal adaptés aux filières de traitement actuellement en place. De plus, certains matériaux à terme ne se transforment pas en matière organique.

Pour résoudre ce problème, il est actuellement envisagé de recycler les meubles et de produire différents types de produits finis à partir de matériaux issus des meubles en fin de vie.

Toutefois, certains des matériaux recyclés comportent des quantités significatives de composés chimiques réglementés. Ces composés sont par exemple les COV (composés organiques volatiles), notamment le formaldéhyde, le DMF (dimethylformamide), ou le chlorophénol. Le formaldéhyde peut se trouver par exemple dans les résidus des colles utilisées pour l'assemblage des meubles, mais également dans les mousses de polyuréthane, dans le latex, dans les liants utilisées dans les bois agglomérés. La réglementation actuelle ne permet la présence de ces composés chimiques qu'en de très faibles quantités dans les produits mis sur le marché.

WO 01/39946 et DE 4224629 décrivent l'un et l'autre un procédé d'assainissement de panneaux de bois contenant par exemple du formaldéhyde.

Dans ce contexte, l'invention vise à proposer un procédé permettant d'assainir les matériaux recyclés issus du recyclage de meubles, permettant d'éliminer certains composés chimiques réglementés dans une proportion suffisante pour permettre la mise sur le marché de produits finis fabriqués à partir des matériaux recyclés.

A cette fin, l'invention porte sur un procédé d'assainissement de matériaux recyclés issus du recyclage de meubles, selon la revendication 1.

Le procédé peut également présenter une ou plusieurs caractéristiques définis dans les revendications dépendantes.

D'autres caractéristiques et avantages de l'invention ressortiront de la description détaillée qui en est donnée ci-dessous, à titre indicatif et nullement limitatif, en référence aux figures annexées, parmi lesquelles :
- la Figure 1 est un diagramme d'étape, illustrant le procédé de l'invention ;
- la Figure 2 est une représentation schématique simplifiée des lignes de production pour les étapes de broyage, de mélange, de formation de la nappe non consolidée et de consolidation ;
- la Figure 3 est une représentation schématique simplifiée de l'étape de consolidation de la nappe de matériaux non consolidée.

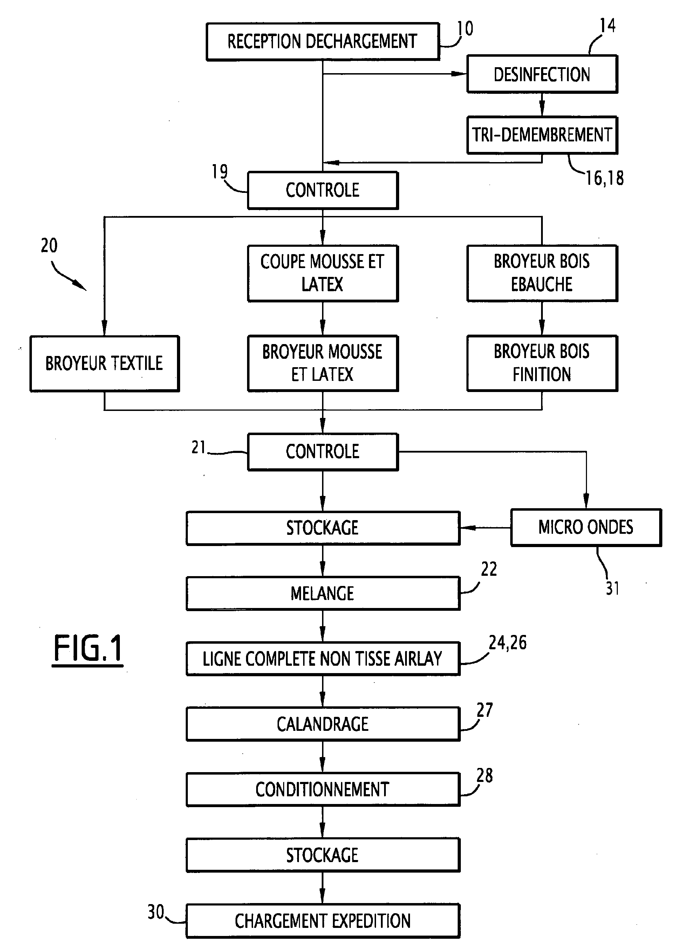

Le procédé qui va être décrit ci-dessous, et dont les principales étapes sont identifiées schématiquement sur la Figure 1, est destiné à recycler des meubles en fin de vie.

Ces meubles peuvent être des éléments de literie, entre autres des matelas et des sommiers. Toutefois, le procédé permet de traiter d'autres types de produits : canapés, canapés-lits, fauteuils, sièges, chutes provenant de la fabrication de matelas et de sommiers neufs, cette liste n'étant pas limitative.

Ces meubles peuvent être également tout autre type de meuble comportant des parties en bois, par exemple des buffets, des armoires, des penderies, des placards, etc. On entend ici par meuble à la fois des meubles complets comportant tous leurs éléments (portes, panneaux latéraux et arrière, fond, tablettes intermédiaires ...), et des éléments de meuble isolés qui ne constituent pas à eux seuls un meuble complet (une porte, un panneau, etc). Le procédé est également adapté pour recycler des chutes de fabrication contenant du bois, par exemple des chutes de fabrication de sommiers ou de meubles, en plus des meubles ou éléments de meubles.

Dans la description qui va suivre, on désignera par « élément à traiter » à la fois les meubles complets, les éléments de meuble, les matelas, les sommiers, les sièges et les chutes de fabrication.

Les meubles recyclés peuvent être constitués en totalité de parties en bois, ou au contraire comporter à la fois des parties en bois et des parties en un autre matériau (tissus, plastique, métal etc). Les parties en bois peuvent être à nu, être peintes, teintées, recouvertes d'un revêtement décoratif en matière plastique ou en tissu etc.

Les parties en bois peuvent être en bois massif, comme par exemple en sapin, en chêne, en merisier, en poirier, etc.

Les parties en bois peuvent être également en bois aggloméré. On entend par bois aggloméré des parties constituées de particules de bois (fibres, copeaux, fragments), assemblées à l'aide d'un liant tel qu'une colle. Ces parties peuvent être assemblées sous pression et à haute température. Le lamellé-collé, les panneaux de fibres à densité moyenne, le contre-plaqué, les panneaux de grandes particules orientées sont des exemples de bois aggloméré, cette liste n'étant pas limitative.

Comme représenté sur la Figure 1, le procédé comporte les étapes suivantes :
- une étape 10 de réception et de déchargement des éléments à traiter ;
- une étape 14 de désinfection des éléments à traiter ;
- une étape 16 de démembrement, dans laquelle des matériaux de base sont obtenus par démembrement des éléments à traiter ;
- une étape 18 de tri, dans laquelle les matériaux de base sont séparés en plusieurs familles de matériaux, selon la nature des matériaux de base ;
- une étape de contrôle préliminaire 19, visant à détecter dans certains matériaux des éléments de base une pluralité de composés chimiques prédéterminés ;
- une étape 20 de broyage des différentes familles de matériaux ;
- une étape de contrôle intermédiaire 21, visant à mesurer dans les matériaux broyés la quantité desdits composés chimiques prédéterminés restant après broyage ;
- une étape 22 de mélange, dans laquelle un mélange est préparé, le mélange comprenant une quantité prédéterminée d'au moins une famille de matériaux broyés, et, plus généralement, des quantités respectives prédéterminées de plusieurs familles de matériaux broyés ;
- une étape 24 de formation d'une nappe de matériau non consolidée à partir du mélange ;
- une étape 26 de consolidation de la nappe de matériau non consolidée ;
- une étape 27 de calandrage de la nappe de matériau consolidée ;
- une étape 28 de conditionnement de la nappe de matériau consolidée et une étape 30 de chargement et d'expédition de la nappe de matériaux consolidée
- une étape 31 d'assainissement par micro-ondes.

Ces différentes étapes vont maintenant être détaillées chacune à leur tour.

A l'étape 10, les éléments à traiter sont reçus et déchargés des moyens de transport.

Les éléments à traiter peuvent comporter :
- des matelas à ressorts, qui comprennent généralement une enveloppe externe textile, et des ressorts logés dans l'enveloppe externe ;
- des matelas à ressorts en sachets, qui comprennent des chapelets de ressorts enfermés dans des sachets textiles, et une enveloppe textile à l'intérieur de laquelle sont placés les ressorts en sachets ;
- des matelas en mousse, qui comprennent une enveloppe textile et une âme en mousse logée à l'intérieur de l'enveloppe textile, la mousse comportant une majorité de polyuréthane ; la mousse comporte généralement plus de 90% de polyuréthane et peut comporter jusqu'à 100% de polyuréthane ;
- des matelas en latex, qui comportent une enveloppe textile, et une âme en latex logée à l'intérieur de l'enveloppe textile ;
- des sommiers, qui comportent généralement un cadre rigide en bois ou en métal, et peuvent comporter des lattes en bois, une enveloppe textile, des ressorts métalliques en spirale etc.
- des meubles comportant des parties en bois, par exemple des buffets, des armoires, des penderies, des placards, etc.

Les éléments à traiter qui sont des éléments en fin de vie, par exemple les matelas et les sommiers usagés, sont ensuite dirigés vers l'étape de désinfection 14. Les éléments à traiter qui ne sont pas en fin de vie, par exemple les chutes de fabrication de matelas et de sommiers neufs, sont dirigés directement vers l'étape de contrôle 19, sans passer par l'étape de désinfection 14, ni par les étapes de démembrement 16 et de tri 18.

Le but de l'étape de désinfection est de détruire les germes bactériologiques qui peuvent être présents dans les éléments à traiter. La désinfection doit être suffisante d'un point de vue sanitaire pour protéger les opérateurs travaillant aux différentes étapes du procédé, et pour garantir une hygiène parfaite des produits finis recyclés.

L'étape de désinfection n'est pas une étape de stérilisation et ne vise pas à détruire intégralement l'ensemble des germes présents dans les éléments à traiter.

L'étape de désinfection vise à supprimer au moins 99% des germes bactériologiques, de préférence au moins 99,9% des germes bactériologiques, encore de préférence au moins 99,99% des germes bactériologiques.

L'étape de désinfection est effectuée soit par voie chimique, soit par ondes électromagnétiques.

Les sommiers, les matelas à ressorts, et les matelas à ressorts en sachets sont traités par voie chimique. Les matelas en mousse et les matelas en latex sont traités soit par voie chimique, soit par ondes électromagnétiques.

La désinfection par voie chimique consiste à pulvériser sur la surface externe des éléments à traiter un produit désinfectant. Cette opération est réalisée dans une chambre hermétique. Après pulvérisation, l'élément à traiter reste dans la chambre pendant une durée de 2h30 environ.

Le produit désinfectant est par exemple le produit sous le nom commercial ANIOS DVA HPH , vendu par le laboratoire ANIOS. La quantité de produit utilisée est de l'ordre de 8 ml pour un matelas de taille normale.

La désinfection par ondes électromagnétiques est effectuée en plaçant l'élément à traiter dans un tunnel micro-ondes.

La puissance maximale du générateur de micro-ondes utilisé est de 80kW. En variante, la puissance maximale du générateur de micro-ondes est de 60kW.

La fréquence du magnétron qui génère les micro-ondes est de 2450MHz environ.

L'élément à traiter est soumis à un rayonnement micro-ondes, ce qui produit une élévation de température rapide au sein de cet élément. La puissance du rayonnement micro-ondes et la durée d'exposition sont choisies en fonction de la taille du matelas, de son épaisseur et du matériau constituant l'âme (mousse de polyuréthane ou latex). La puissance et la durée sont choisies de manière à maintenir la couche centrale du matelas à une température d'au moins 70°C pendant une durée d'au moins 45 secondes. De préférence, la puissance et la durée sont choisies de manière à maintenir la couche centrale du matelas à une température comprise entre 70 °C et 90 °C pendant une durée comprise 45 secondes et 90 secondes.

A l'étape de démembrement 16, les éléments à traiter, désinfectés ou non, sont démontés par des opérateurs.

A l'étape de tri 18, les matériaux de base obtenus par démembrement des éléments à traiter sont séparés, de préférence en cinq familles de matériaux. Le tri est effectué en fonction de la nature des matériaux de base. Les cinq familles sont les suivantes :
- une première famille rassemblant les matériaux de base qui vérifient en même temps les deux conditions suivantes : les matériaux ne contiennent pas de fibres textiles, et ils contiennent majoritairement du polyuréthane ;
- une seconde famille rassemblant les matériaux de base contenant majoritairement du latex ;
- une troisième famille rassemblant les matériaux de base contenant des fibres textiles ;
- une quatrième famille rassemblant les matériaux de base contenant majoritairement du bois ;
- une cinquième famille rassemblant les matériaux de base contenant majoritairement du métal.

Dans la première famille, on trouve essentiellement les âmes des matelas en mousse, et les chutes de fabrication des matelas en mousse de polyuréthane.

Dans la seconde famille, on trouve les âmes des matelas en latex.

On trouve dans la troisième famille essentiellement les revêtements textiles des matelas et des sommiers. Ces matériaux sont généralement des matériaux multicouches, certaines couches étant en textile et d'autres couches étant par exemple en mousse de polyuréthane, en ouate etc. Au total, ces matériaux comportent par exemple entre 15 et 25% de fibres textiles, le reste étant constitué de mousse ou d'autres substances.

Dans la quatrième famille, on trouve les structures en bois des sommiers et les parties en bois des meubles ou éléments de meubles.

La cinquième famille comporte essentiellement les ressorts hélicoïdaux se trouvant dans les matelas à ressorts, dans les matelas à ressorts en sachets, et dans les sommiers, ainsi que les cadres métalliques des sommiers.

A l'étape 19, la composition de certains matériaux des éléments à traiter est contrôlée. Ces matériaux sont ceux susceptibles de contenir des composés chimiques qui ne sont pas autorisés dans le produit fini. Ces composés chimiques sont par exemple des COV (Composés Organiques Volatiles), le formaldéhyde, le DMF et le chlorophénol. Les matériaux susceptibles de contenir de tels composés chimiques sont par exemple le latex, les mousses de polyuréthane, les résidus de colles, les textiles, les bois agglomérés etc. Le formaldéhyde se trouve notamment dans les liants des bois agglomérés, ou dans les colles permettant de coller les couches de certains matériaux les unes aux autres.

Le contrôle est effectué en prélevant une petite quantité de chaque matériau à contrôler, et en analysant la composition de cet échantillon dans un appareil de détection automatique pour vérifier si l'échantillon contient un composé chimique figurant dans une liste prédéterminée. Cet appareil peut par exemple être un appareil de chromatographie en phase gazeuse couplé à un F.I.D. (Flame lonization Detector).

Si le matériau contient un composé chimique de la liste, en une quantité inférieure à un seuil prédéterminé, ce matériau est traité par le procédé de recyclage. Les étapes de broyage et de consolidation 20 et 26 permettent en effet d'éliminer une fraction importante du composé chimique, et de faire que la concentration dudit composé chimique dans la nappe de produit non tissé consolidée soit dans les normes acceptables. L'étape de consolidation met en oeuvre un traitement thermique, comme expliqué plus loin, et est particulièrement efficace pour l'élimination des composés chimiques réglementés. Le seuil prédéterminé est spécifique à chaque composé chimique. Il est fonction entre autre du taux d'élimination du composé chimique aux étapes de broyage et de consolidation, et de la composition de la nappe de matériau consolidé (proportion du matériau contenant le composé chimique dans la nappe).

Si le matériau contient une quantité du composé chimique supérieure au seuil prédéterminé, alors ce matériau n'est pas traité par le procédé de recyclage. Il est dirigé par exemple vers une décharge contrôlée, prévue pour accepter des matériaux contenant le composé chimique détecté.

Les quantités des différents composés chimiques réglementés acceptables dans les produits finis destinés à l'ameublement sont indiquées dans les labels et certifications CERTIPUR, EUROLATX, ECOLABEL européen pour le matelas.

A l'étape de broyage 20, les différentes familles de matériaux sont traitées séparément.

Les première et seconde familles de matériaux sont traitées par le même type de machine, mais séparément. Les matériaux se présentent initialement sous forme de blocs. Les matériaux sont broyés en éléments de forme cubique, de granulométrie comprise entre 8 et 12 mm. L'opération est effectuée en deux temps. Dans un premier temps, les blocs sont coupés en tranches par des lames, par exemple dans une machine de type guillotine. Dans un second temps, les tranches sont réduites en éléments de petite taille, par exemple dans un granulateur à lame circulaire et trémie de calibrage.

La troisième famille de matériaux est traitée par exemple dans un broyeur à rouleaux équipés de couteaux. Les matériaux sortent des broyeurs sous la forme de fibres en bourre.

La quatrième famille de matériaux est broyée en copeaux de longueur comprise entre 10 et 20 mm et de largeur comprise 2 et 5 mm. L'opération de broyage est effectuée en deux temps. Les matériaux sont d'abord traités dans un broyeur d'ébauche à rotor, avec une trémie de 30 à 50 mm. Les matériaux issus du broyeur d'ébauche passent ensuite dans un broyeur secondaire, équipé d'une trémie de 4 mm à 10 mm. Les copeaux sont collectés dans des sacs.

Des séparateurs vibrants équipés de rouleaux magnétiques sont placés immédiatement en aval de chaque broyeur. Ils permettent de séparer les pièces métalliques des autres matériaux broyés.

En variante, il est possible de broyer directement les sommiers ayant un cadre en bois et les meubles contenant des parties en bois, sans démembrement préalable. Le broyage est effectué dans les mêmes broyeurs équipés de séparateurs magnétiques que décrits ci-dessus. Dans ce cas, le tri entre la quatrième famille de matériaux (bois) et la cinquième famille de matériaux (métal) est effectué par l'intermédiaire des rouleaux magnétiques. La quatrième famille de matériaux contient alors non seulement du bois mais aussi d'autres matériaux comme l'habillage textile des sommiers.

Concernant la cinquième famille de matériaux, il est possible de prévoir que les ressorts en spirale en bon état sont séparés et réutilisés pour la fabrication de nouveaux matelas, de nouveaux sommiers ou de tout autre produit adapté. Les ressorts inutilisables, et les autres pièces métalliques sont broyés dans les mêmes broyeurs que la quatrième famille de matériaux Ils sont ensuite envoyés en décharge ou vendus à des ferrailleurs.

A l'issu de l'étape de broyage 20, les matériaux broyés des différentes familles sont transférés dans des unités de stockage dédiées.

Il est à noter que l'étape de broyage provoque l'élimination partielle de certains composés chimiques. Ces composés sont par exemple libérés sous forme gazeuse.

Ceci est particulièrement vrai pour les composés se trouvant dans des matériaux dits « hermétiques », c'est-à-dire habillés par des revêtements imperméables aux gaz. Ces revêtements peuvent être par exemples des vernis, des peintures, des couches de matériaux plastiques etc. Certains meubles (armoires par exemple) comportent des panneaux réalisés dans des matériaux hermétiques.

Les composés chimiques volatiles contenus dans de tels matériaux ne s'évaporent pas au cours de la vie du meuble, car ils sont confinés à l'intérieur des matériaux par les revêtements. Lors de l'opération de broyage, ces composés sont partiellement libérés.

Au contraire, dans les matériaux dits « aérés », comme les mousses, les bois massifs nus et les bois agglomérés nus, les composés chimiques volatiles s'évaporent progressivement au cours de la vie du meuble. La quantité de composés chimiques volatiles se trouvant dans les matériaux aérés en fin de vie est très inférieure à celle se trouvant dans les matériaux hermétiques en fin de vie.

A l'étape 21, la composition des matériaux susceptibles de contenir des composés chimiques non autorisés dans le produit fini est une nouvelle fois contrôlée. Ce contrôle permet de vérifier l'efficacité du broyage pour l'élimination desdits composés. Il est effectué comme à l'étape 19.

En fonction des résultats des contrôles, les matériaux sont soit envoyés à l'étape de mélange 22, soit envoyés à l'étape d'assainissement par micro-ondes 31. Si le matériau contient un composé chimique de la liste, en une quantité supérieure à un seuil prédéterminé, ce matériau est traité par micro-ondes pour éliminer une partie dudit composé chimique. Comme à l'étape 19, le seuil prédéterminé est spécifique à chaque composé chimique. Il est fonction entre autre du taux d'élimination du composé chimique à l'étape de consolidation, et de la composition de la nappe de matériau consolidé (proportion du matériau contenant le composé chimique dans la nappe). Les autres matériaux ne sont pas traités par micro-ondes.

A l'étape 22, un mélange est préparé à partir d'une ou plusieurs familles de matériaux broyés. Des quantités prédéterminées des différentes familles de matériaux broyés sont mélangées les unes aux autres, ces quantités étant choisies en fonction du produit final à obtenir.

Par ailleurs, des fibres bi-composantes sont ajoutées au mélange. Ces fibres bi-composantes sont destinées, après chauffage, à consolider la nappe de matériaux, comme décrit plus loin.

En variante, d'autres matériaux peuvent être ajoutés au mélange. Par exemple, une quantité supplémentaire de fibre textile peut être ajoutée au mélange, en fonction du produit finit à produire. Il est possible d'ajouter au mélange des additifs choisis en fonction de la nature du produit fini. Par exemple, les additifs peuvent comporter un produit anti-acariens, un produit anti-feu...

Dans un premier exemple de réalisation, le produit fini est une nappe d'un matériau de type non tissé, d'épaisseur comprise entre 5 et 20mm. Le poids de cette nappe est typiquement compris entre 400 et 1200gr/m², de préférence entre 600 et 1000 gr/m², et vaut typiquement 800gr/m².

Pour produire une telle nappe, on choisit un mélange qui comprend, en poids :
- entre 40% et 80% de la première famille de matériaux, de préférence entre 50 et 70% de la première famille de matériaux, et par exemple 60% de la première famille de matériaux ;
- entre 15 et 45% de la troisième famille de matériaux, de préférence entre 25 et 35% de la troisième famille de matériaux, et typiquement 30% de la troisième famille de matériaux ;
- entre 5 et 20% de fibres bi-composantes, de préférence entre 5 et 15% de fibres bi-composantes, et typiquement 10% de fibres bi-composantes.

Dans un second exemple de réalisation, le produit fini est une nappe d'un matériau de type non tissé, d'épaisseur comprise entre 20 et 50mm. Le poids de la dite nappe est compris entre 1200 et 2200gr/m², de préférence entre 1400 et 2000gr/m², et vaut par exemple 1700gr/m².

Pour produire une telle nappe, on choisit un mélange qui comprend, en poids :
- entre 30% et 70% de la première famille de matériaux, de préférence entre 40 et 60% de la première famille de matériaux, et typiquement 50% de la première famille de matériaux ;
- entre 5% et 25% de la seconde famille de matériaux, de préférence entre 10 et 20% de la seconde famille de matériaux, et typiquement 15% de la seconde famille de matériaux ;
- entre 10% et 30% de la troisième famille de matériaux, de préférence entre 15% et 25% de la troisième famille de matériaux, et typiquement 20% de la troisième famille de matériaux ;
- entre 5% et 25% de fibres bi-composantes, de préférence 10 et 20% de fibres bi-composantes , et typiquement 15% de fibres bi-composantes.

Dans un troisième exemple de réalisation, le produit fini est une nappe d'un matériau de type non tissé, d'épaisseur supérieure à 50mm. La nappe présente par exemple une densité comprise entre 2000 et 4000gr/m², de préférence comprise entre 2500 et 3500 gr/m², et valant typiquement 3000 gr/m².

Pour produire cette nappe, on choisit un mélange qui contient, en poids :
- entre 20% et 60% de la première famille de matériaux, de préférence entre 30% et 50%, par exemple 40% de la première famille de matériaux ;
- entre 15% et 35% de la seconde famille de matériaux, de préférence entre 20% et 30%, par exemple de 25% de la seconde famille de matériaux ;
- entre 5% et 25% de la troisième famille de matériaux, de préférence entre 10% et 20%, par exemple 15% de la troisième famille de matériaux ;
- entre 10% et 30% de fibres bi-composantes, de préférence entre 15% et 25%, par exemple 20% de fibres bi-composantes.

Selon un quatrième exemple de réalisation, le produit fini est une nappe d'un matériau thermo formable à base de bois, d'épaisseur comprise entre 5 et 15mm, par exemple d'épaisseur 10mm.

On choisit pour un tel produit fini un mélange qui comprend, en poids :
- entre 50% et 95% de la quatrième famille de matériaux, de préférence entre 65% et 90% de la quatrième famille de matériaux, et encore de préférence entre 75% et 85% de bois broyé
- entre 5 et 50% de fibres bi-composantes, de préférence entre 10 et 35% de fibres bi-composantes, et encore de préférence entre 15% et 25% de fibre bi-composantes.

Les fibres bi-composantes sont constituées de deux composants répartis sur toute la longueur de la fibre. Chaque composant peut présenter différentes propriétés physiques ou chimiques. Et les composants peuvent être soit des variantes d'un même type de polymère, soit deux types de polymères totalement différents. Un exemple d'une telle fibre est commercialisé par la société MAX MODEL SA sous le nom « Polyester staple fibre, low melt 4/51mm 110°C flame retardant ref 4140 ». L'utilisation d'autres composants thermofusi-bles est envisageable.

A l'étape 24, une nappe de matériau non consolidée est formée à partir du mélange, typiquement selon le procédé connu sous le nom de «airlay ». Ce procédé consiste à former une nappe de matériau de type non tissé en dispersant le mélange dans un courant d'air de forte vélocité, et en déposant le mélange transporté par le courant d'air dans une chambre. Le courant d'air peut être créé par une surpression en amont de la chambre ou par une dépression en aval de la chambre.

Avant de passer à l'étape de formation de la nappe 24, le mélange peut passer dans une ou plusieurs ouvreuses, qui comportent chacune un ou plusieurs rouleaux rotatifs pourvus de picots. Ces rouleaux ont principalement pour fonction d'orienter les parties en textile de la première famille de matériaux, de manière à déconsolider les textiles et d'ouvrir les fibres. Les rouleaux permettent également de malaxer les différents matériaux du mélange, et d'homogénéiser ce mélange.

A la sortie de l'étape 24, les matériaux constituant la nappe ne sont pas encore liés entre eux et sont disposés en vrac sur la grille.

A l'étape 26, la nappe de matériau de type non tissé est consolidée. Cette consolidation est effectuée par un traitement thermique. La nappe de matériaux non consolidée est chauffée dans un four, à une température supérieure à 150°C, par exemple supérieure à 160°C, typiquement de l'ordre de 180°C. La nappe est maintenue à ladite température pendant une durée comprise entre 30 et 60 secondes. Le traitement thermique provoque la fusion partielle de fibres bi-composantes ce qui contribue à lier entre eux les différents composants du mélange (fibres textiles, latex, polyuréthane, copeaux de bois).

Ce traitement thermique provoque aussi l'élimination de certains composés chimiques, par exemple les COV, le formaldéhyde, le DMF ou le chlorophénol. Ces composés peuvent être décomposés thermiquement, ou être libérés sous forme gazeuse.

Les vapeurs des composés chimiques sont piégés par exemple sur des filtres à charbons actifs.

De manière concomitante à l'opération de traitement thermique, il est possible de laminer une couche de revêtement sur la nappe de matériaux. Il est possible de laminer toutes sortes de couches : des couches en tissus, des couches en cuir, des couches décoratives en matière plastique etc. Les deux faces de la nappe peuvent être ainsi revêtues. De préférence, l'une des faces est revêtue en amont de l'étape de traitement thermique, et l'autre immédiatement en aval de l'étape de traitement thermique.

Après l'étape 26 de traitement thermique 26, la nappe peut passer à une étape 27 de calandrage et à une étape de découpe, pour former des pièces de dimensions adaptées à leur utilisation finale. Alternativement, la nappe peut ne pas être découpée mais être enroulée et être stockée sous forme de rouleau (étape de conditionnement 28).

Enfin, la nappe est chargée et expédiée, soit sous forme de rouleau, soit sous forme de pièces déjà découpées (étape 30).

A l'étape d'assainissement 31, les matériaux broyés sont soumis à un rayonnement micro-ondes. Les matériaux broyés sont chauffés à coeur. Ils sont amenés à une température à coeur supérieur à 70°C, et maintenus à cette température pendant une durée prédéterminée. La température et la durée sont fonction de la nature du matériau (bois, mousse, latex), du ou des composés chimiques à éliminer, et du taux d'élimination attendu. La température et la durée sont choisies de manière à ne pas détériorer le matériau (brulure dû à un chauffage excessif).

Sous l'effet du chauffage, les composés chimiques à éliminer sont évaporés et/ou décomposés. Ils sont captés et neutralisés sur des charbons actifs.

Les composés chimiques piégés sur les charbons actifs sont récupérés sous forme de poussières et traités comme des déchets ultimes. Ils sont pris en charge par des sociétés spécialisés et conditionnés par des procédés adaptés.

Les composés piégés sur les charbons actifs du four de traitement thermique de la nappe sont traités de la même façon.

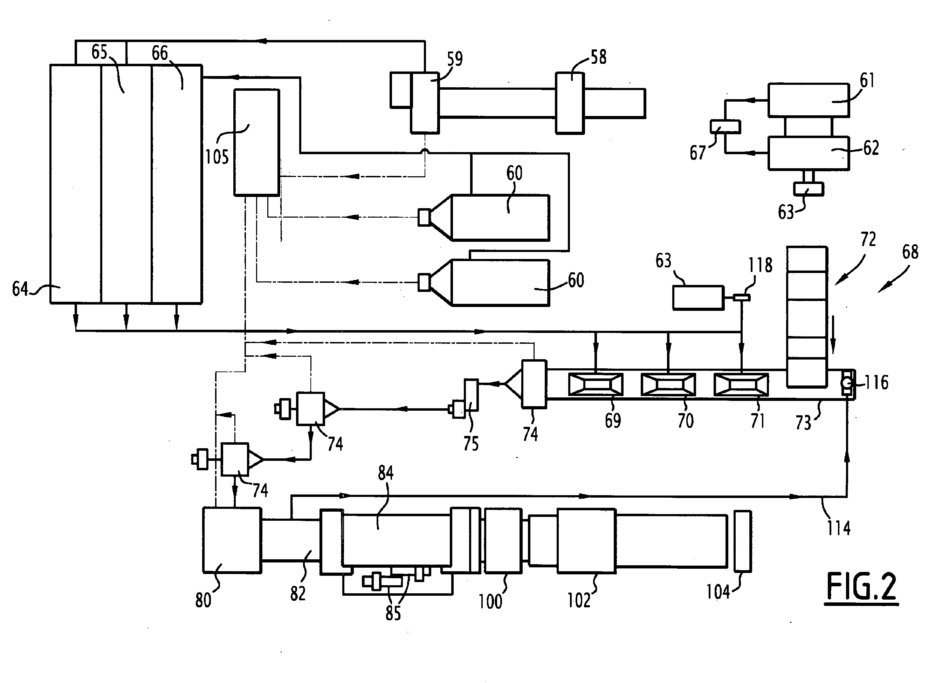

Les machines utilisées pour broyer les différentes familles de matériaux sont représentées sur la figure 2.

Concernant les première et seconde familles, les blocs sont d'abord coupés en tranches par des lames, par exemple dans une machine 58 de type guillotine. Dans un second temps, les tranches sont réduites en éléments de petite taille dans un granulateur 59 de type MG2000 MOLINARI. Le granulateur est du type à monorotor équipé de couteaux et trémie de calibrage.

La troisième famille de matériaux est traitée par exemple dans un broyeur 60 à rouleaux équipés de couteaux, du type SM500McAfee Shredder. Comme visible sur la figure 2, l'installation peut comporter deux lignes parallèles dédiées à la troisième famille de matériaux, chacune avec un broyeur 60. Les matériaux sortent des broyeurs sous la forme de fibres en bourre.

L'opération de broyage de la quatrième famille de matériaux est effectuée en deux temps. Les matériaux sont d'abord traités dans un broyeur d'ébauche 61 à rotor, de marque WAGNER et de type WS70, avec une trémie de 30 à 50mm. Les matériaux issus du broyeur d'ébauche passent ensuite dans un broyeur secondaire 62, par exemple de marque Wagner et de type WS30, équipé de grilles d'environ 4 mm. Les copeaux sont collectés dans des sacs 63.

Les séparateurs vibrants équipés de rouleaux magnétiques, placés immédiatement en aval de chaque broyeur, ne sont pas représentés.

Les broyeurs sont adaptés pour traiter les matériaux issus du démembrement des éléments à traiter, mais aussi les meubles entiers non démembrés (sommiers, armoires, éléments de meubles...)

Les matériaux des trois premières familles sont stockés dans des conteneurs de grands volumes 64, 65, 66. Les broyeurs 59 et 60 sont reliés aux conteneurs 64, 65, 66 par des conduits. Les matériaux sont transférés le long des conduits par air pulsé. Les conteneurs 64, 65, 66 peuvent être équipés chacun de moyens d'agitation, par exemple de buses de soufflage d'air déplaçables à l'intérieur du conteneur. Les copeaux de bois de la quatrième famille sont stockés dans des sacs 63 et les pièces métalliques de la cinquième famille dans des bacs ou des conteneurs déplaçables 67. Chaque famille de matériaux est ainsi stockée séparément des autres familles de matériaux.

Le dispositif de mélange 68 est représenté schématiquement sur la figure 2. Le dispositif 68 comprend :
- trois dispositifs doseurs 69, 70, 71, dédiés respectivement aux première, seconde, et troisième familles de matériaux ;
- un dispositif 72 de dosage de fibres bi-composantes;
- un convoyeur 73 alimenté par les dispositifs de dosage 69, 70, 71 et 72 ;
- au moins une ouvreuse 74, prévue pour malaxer les matériaux amenés par le convoyeur 73 ;
- un dispositif 75 d'ajout d'additifs ;

Les dispositifs de dosage 69, 70, 71 sont des silos, chacun ayant un volume interne prévu pour recevoir une quantité respectivement de la première famille, de la deuxième et de la troisième famille de matériaux. Chaque silo 69, 70, 71 est équipé de capteurs adaptés pour mesurer le poids de matériaux chargés à l'intérieur du volume interne. Les silos 69, 70, 71 sont raccordés par des conduits de transport aux stockages 64, 65, 66 dédiés respectivement aux première, seconde et troisième familles de matériaux. Le transfert est effectué par l'intermédiaire d'un dispositif à air pulsé.

Chaque silo 69, 70, 71 est équipé en partie inférieure d'une sortie située à l'aplomb du convoyeur 73. Chacun des silos est équipé d'une vanne pilotée, permettant de sélectivement ouvrir et fermer la sortie.

Les fibres bi-composantes se présentent sous la forme d'un bloc de matériau fibreux. Le dispositif 72, dédié au dosage des fibres bi-composantes comporte un outil prévu pour grignoter le bloc de fibres bi-composantes et produire des copeaux, une cellule de pesage des copeaux et un organe de transfert de la cellule de pesage vers le convoyeur 73.

L'outil de grignotage peut être de tout type adapté, et comporte par exemple une pluralité de pointes afin de détacher les fibres bi-composantes du bloc comprimé.

Les fibres détachées par l'outil de grignotage sont transférées à la cellule de pesée par exemple par une bande transporteuse. Elles sont transportées de la cellule de pesage au convoyeur 73 par une chute ou par une autre bande transporteuse.

Dans l'exemple de réalisation représenté sur la Figure 2, le dispositif 68 comporte trois ouvreuses 74 placées en série. Les matériaux déposés sur le convoyeur 73, à l'extrémité dudit convoyeur, sont déversés dans la première ouvreuse 74.

Les trois ouvreuses 74 sont du même type.

Le dispositif 75 est par exemple intercalé entre la première et la seconde ouvreuse 74. Il est prévu pour ajouter au mélange des additifs choisis en fonction de la nature du produit fini. Par exemple, les additifs peuvent comporter un produit anti-acariens, un produit anti-feu...

Les ouvreuses 74 et le dispositif 75 sont raccordés entre eux par des conduits de liaison. Le mélange est transféré le long des conduits par air pulsé.

Le dispositif de formation de la nappe de matériaux non consolidée, et le dispositif de traitement thermique sont représentés schématiquement sur la Figure 2. Le dispositif 80 de formation de la nappe est du type décrit dans la demande de brevet Italien n° PO2007/A000021. Ce dispositif comporte deux chambres à dépression, et est particulièrement bien adapté au traitement d'un mélange contenant une forte proportion de polyuréthane et de latex.

La dernière ouvreuse 74 est raccordée au dispositif de formation de la nappe 80 par un conduit. Le mélange est transféré le long du conduit par exemple par air pulsé.

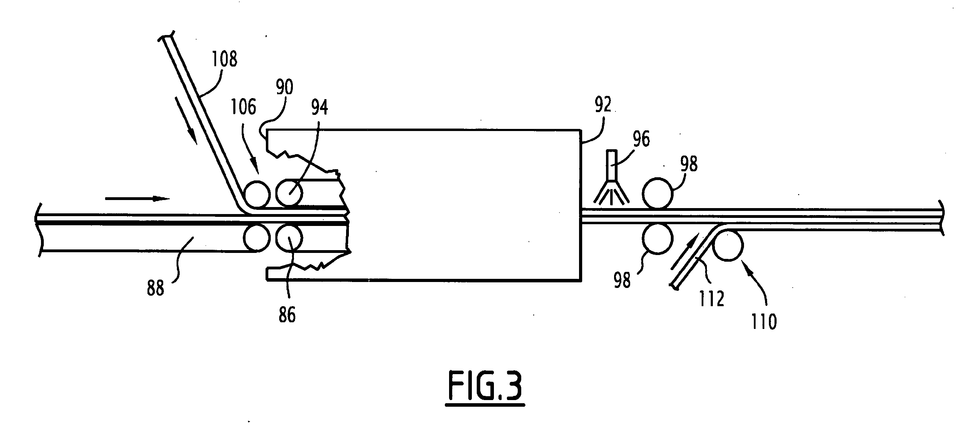

La nappe 82 sortant du dispositif 80 est transportée sur un convoyeur et pénètre dans un four 84 pour y subir le traitement thermique. Le four présente par exemple une longueur totale de 5m, et est divisé en deux chambres placées en série l'une avec l'autre. Il est chauffé par des brûleurs à gaz 85. Il est équipé de ventilateurs pour permettre la circulation de l'air chauffé par les brûleurs à l'intérieur des deux chambres. Le dispositif est équipé de deux convoyeurs placés à l'intérieur du four 84, comme visible sur la Figure 3. Le convoyeur inférieur 86 est placé dans le prolongement du convoyeur 88, qui assure le transport de la nappe depuis le dispositif de formation de la nappe 80 jusqu'au four 84. Le convoyeur 86 assure le transport de la nappe à travers le four 84 depuis l'entrée 90 jusqu'à la sortie 92. Le convoyeur supérieur 94 est placé au-dessus du convoyeur 86. L'écartement vertical du convoyeur 94 par rapport au convoyeur 86 est ajustable, de telle sorte que le convoyeur 94 calibre l'épaisseur de la nappe 82 à l'entrée du four. Le convoyeur 94 s'étend sensiblement sur toute la longueur du four, de l'entrée 90 à la sortie 92.

La nappe 82 subit un refroidissement en sortie du four 84, d'abord par projection d'air froid par l'intermédiaire de buses 96, puis par calandrage à l'aide de rouleaux refroidis 98. En aval des rouleaux de calandrage 98 peut être placé un dispositif 100 (Figure 2) apte à aiguiller la nappe 82 soit vers une unité de découpe 102 soit vers un rouleau de stockage 104.

Comme visible sur la Figure 3, le dispositif de traitement thermique peut en outre comporter un ensemble 106 permettant de laminer une couche de revêtement 108 sur l'une des faces de la nappe 82, ici la face supérieure. L'ensemble 106 est placé immédiatement en amont du four 84. Un dispositif similaire 110 est placé en aval des rouleaux calandrages 98, de manière à laminer une autre couche de revêtement 112 sur la face opposée de la nappe 82, ici la face inférieure.

Comme visible sur la Figure 2, les chutes de matière provenant du dispositif de formation de la nappe 80 sont collectées et renvoyées via la ligne 114 jusqu'au convoyeur 73. Après broyage dans un broyeur 116, ces matériaux sont recyclés sur ce convoyeur 73.

Le dispositif de mélange 68 comporte encore une unité d'aspiration 118, prévue pour aspirer des copeaux de bois et pour les transférer vers l'un des silos 69, 70 ou 71.

Les copeaux de bois en sortie des broyeurs sont collectés dans des conteneurs, par exemple dans des sacs 63. Ces sacs 63 sont ensuite transportés à proximité du convoyeur 73, les copeaux de bois pouvant dès lors être aspirés par le dispositif 118.

L'installation de recyclage est encore équipée d'un dispositif de ventilation centralisée 105, pourvue d'extracteurs d'air adaptés pour aspirer l'air dans les principaux équipements de l'installation : les broyeurs pour la troisième famille de matériaux, le granulateur pour les première et seconde familles de matériaux, les silos, les ouvreuses, le dispositif 80 de formation de la nappe. Les poussières sont piégées sur un filtre, par exemple un filtre à manche. Elles peuvent être réutilisées par exemple dans des produits de revêtement de chaussée.

Les nappes obtenues par le procédé ci-dessus peuvent trouver de multiples applications. Les nappes contenant une forte proportion de polyuréthane peuvent être utilisées comme composants ou produits finis pour l'ameublement, notamment pour la protection des lattes de sommier, comme rehausseur de matelas, comme garnissage dans les plateaux des matelas. Ces nappes peuvent également être utilisées comme isolant thermique et phonique pour le secteur du bâtiment, ou comme matelassure pour l'automobile.

Les nappes contenant une forte proportion de copeaux de bois peuvent être utilisées pour l'ameublement, et sont particulièrement adaptées pour subir une opération de thermoformage.

Les nappes décrites ci-dessus peuvent également être fabriquées à partir de matériaux qui ne sont pas issus du recyclage d'éléments de literie ou de meubles ou de chutes de fabrication. Les matériaux peuvent être des matières premières directement approvisionnées auprès des fabricants, spécialement pour la production des nappes.

Dans le premier exemple de réalisation, le produit fini est une nappe d'un matériau de type non tissé, d'épaisseur comprise entre 5 et 20mm. La masse volumique est typique comprise entre 20 et 60 kg/m³, de préférence entre 30 et 50 kg/m³, et vaut par exemple 40 kg/m³.

Le mélange comprend dans ce cas, en poids :
- entre 60% et 90% de mousse de polyuréthane, de préférence entre 70% et 85% de mousse de polyuréthane, et typiquement entre 80% et 85% de mousse de polyuréthane
- entre 2% et 15% de fibres textiles, de préférence entre 3% et 10% de fibres textiles, et par exemple entre 4% et 8% de fibres textiles
- entre 5% et 20% de fibres bi-composantes, de préférence entre 5% et 15% de fibres bi-composantes, par exemple entre 8 et 12% de fibres bi-composantes.

Le produit fini, à savoir la nappe consolidée, sans les éventuels revêtements laminés, présente sensiblement la même composition massique.

Par exemple, la nappe consolidée comprend, en poids, 84% de mousse de polyuréthane, 6% de fibres textiles, et 10% de fibres bi-composantes.

Dans le second exemple de réalisation, le produit fini est une nappe d'un matériau de type non tissé, d'épaisseur comprise entre 20 et 50mm. La masse volumique de la nappe est comprise entre 25 et 65 kg/m³, de préférence entre 55 et 65 kg/m³, et vaut typiquement 46 kg/m³.

Des essais de fatigue statique ont été effectués pour cette nappe, selon la norme NFT56116. La perte de hauteur était d'environ 1.4mm. Par ailleurs, des essais de fatigue dynamique ont été effectués pour la dite nappe, selon la norme NF EN ISO3385. La perte de hauteur était d'environ 13.5mm, avec une perte de dureté de 14,6%.

Le mélange comprend pour cet exemple de réalisation, en poids :
- entre 45% et 75% de mousse de polyuréthane, de préférence entre 55% et 75% de mousse de polyuréthane, par exemple entre 65% et 70% de mousse de polyuréthane ;
- entre 5% et 25% de latex, de préférence entre 10% et 20% de latex, par exemple entre 13% et 17% de latex ;
- entre 1% et 10% de fibres textiles, de préférence entre 2% et 7% de fibres textiles, par exemple entre 3% et 5% de fibres textiles ;
- entre 5% et 25% de fibres bi-composantes, de préférence entre 10% et 20% de fibres bi-composantes, par exemple entre 13% et 17% de fibres bi-composantes.

Le produit fini, à savoir la nappe consolidée, sans les éventuels revêtements laminés, présente sensiblement la même composition massique.

Par exemple, la nappe consolidée comprend, en poids, 66% de mousse de polyuréthane, 15% de latex, 4% de fibres textiles, et 15% de fibres bi-composantes.

Dans le troisième exemple de réalisation, le produit fini est une nappe d'un matériau de type non tissé, d'épaisseur supérieure à 50mm. La masse volumique de la nappe est comprise entre 40 et 80kg/m³, de préférence entre 50 et 70kg/m³, et vaut typiquement 60 kg/m³.

Des essais de fatigue statistique ont été effectués sur cette nappe, selon la nappe NFT56116. La perte de hauteur était d'environ 0.5mm.

Des essais de fatigue dynamique ont également été effectués pour cette nappe, selon la norme NF EN ISO 3385. La perte de hauteur était de 8.8mm environ. La perte de dureté est de l'ordre de 14,6%.

Le mélange comprend pour cet exemple de réalisation, en poids :
- entre 35% et 65% de mousse de polyuréthane, de préférence entre 45% et 60% de mousse de polyuréthane, par exemple entre 50% et 55% de mousse de polyuréthane ;
- entre 15% et 35% de latex, de préférence entre 20% et 30% de latex, par exemple entre 22% et 27% de latex ;
- entre 1% et 8% de fibres textiles, de préférence entre 2% et 6% de fibres textiles, par exemple entre 2% et 4% de fibres textiles ;
- entre 10% et 30% de fibres bi-composantes, de préférence entre 15% et 25% de fibres bi-composantes, par exemple entre 17% et 22% de fibres bi-composantes.

Le produit fini, à savoir la nappe consolidée, sans les éventuels revêtements laminés, présente sensiblement la même composition massique.

Par exemple, la nappe consolidée comprend, en poids, 52% de mousse de polyuréthane, 25% de latex, 3% de fibres textiles, et 20% de fibres bi-composantes.

Dans le quatrième exemple de réalisation, le produit fini est une nappe d'un matériau thermoformable à base de bois, d'épaisseur comprise entre 5 et 15mm, par exemple d'épaisseur 10mm.

Le produit fini, sans les éventuels revêtements laminés, comprend en poids :
- entre 50% et 95% de bois, de préférence entre 65% et 90% de bois, par exemple entre 75% et 85% de bois ;
- entre 5% et 50% de fibres bi-composantes, de préférence entre 10% et 35% de fibres bi-composantes par exemple entre 15% et 25% de fibres bi-composantes.

Par exemple, la nappe consolidée comprend, en poids, 80% de bois et 20% de fibres bi-composantes. Il est à noter que toutes les nappes consolidées décrites ci-dessus comportent une quantité significative de fibres bi-composantes. Celui-ci contribue à confiner à l'intérieur de la nappe les résidus de composés chimiques tels que les COV, le formaldéhyde, le dimethylformamide, ou le chlorophénol. Les émissions desdits composés chimiques à partir de la nappe sont pratiquement négligeables.

## Revendications

1. Procédé d'assainissement de plusieurs familles de matériaux recyclés issus du recyclage de meubles, au moins une partie des matériaux recyclés appartient à une des familles suivantes : une première famille rassemblant des matériaux comprenant majoritairement du polyuréthane, une seconde famille rassemblant des matériaux contenant majoritairement du latex, une troisième famille rassemblant des matériaux contenant des fibres textiles et une quatrième famille rassemblant des matériaux contenant majoritairement du bois, le procédé comprenant les étapes suivantes :
- une étape d'approvisionnement (10) de matériaux recyclés issus du recyclage de meubles, ces matériaux recyclés contenant une quantité initiale d'au moins un composé chimique de la liste suivante : les COV (composés organiques volatiles), le formaldéhyde, le dimethylformamide, le chlorophénol ;
- une étape de broyage (20) des différentes familles de matériaux recyclés traitées séparément :
- une étape (24) de formation d'une nappe de matériau non consolidée à partir des matériaux recyclés broyés, des fibres bi-composantes étant ajoutées aux matériaux recyclés broyés avant cette étape de formation de la nappe de matériau non consolidée,
- une étape (26) de traitement thermique, au cours de laquelle les matériaux recyclés broyés sont portés à une température comprise entre 150°C et 180°C ayant pour effet de consolider la nappe de matériau non consolidée, les matériaux recyclés broyés à l'issue de l'étape de traitement thermique ayant une quantité finale dudit composé chimique inférieure à la quantité initiale.

2. Procédé selon la revendication 1, **caractérisé en ce que**, pendant l'étape (26) de traitement thermique, les matériaux recyclés broyés sont maintenus à une température comprise entre 150°C et 180°C pendant une durée de 30 à 60 secondes.

3. Procédé selon la revendication 1 ou 2, **caractérisé en ce qu'**il comprend une étape de chauffage (31) des matériaux broyés par micro-ondes, précédant l'étape de traitement thermique.

4. Procédé selon la revendication 3, **caractérisé en ce que** à l'étape de chauffage par micro-ondes, les matériaux broyés sont chauffés à une température supérieure à 70 °C.

5. Procédé selon l'une quelconque des revendications précédentes, **caractérisé en ce que** les matériaux recyclés sont un mélange d'au moins deux des familles suivantes : la première famille rassemblant des matériaux comprenant majoritairement du polyuréthane, la seconde famille rassemblant des matériaux contenant majoritairement du latex, la troisième famille rassemblant des matériaux contenant des fibres textiles, et la quatrième famille rassemblant des matériaux contenant majoritairement du bois.

6. Procédé selon l'une des revendications 1 à 5, **caractérisé en ce que**, à l'étape (24) de formation de la nappe de matériau non consolidée, les matériaux recyclés broyés sont entraînés et dispersés par un flux d'air et déposés dans une chambre, selon le procédé connu sous le nom d'air lay.

7. Procédé selon l'une quelconque des revendications précédentes, **caractérisé en ce qu'**il comprend une étape de contrôle des matériaux recyclés, au cours de laquelle les quantités initiales desdits composés chimiques dans les matériaux recyclés sont estimées.

## Patentansprüche

1. Verfahren zur Sanierung von mehreren Recyclingmaterialfamilien, hervorgegangen aus dem Recycling von Möbeln, wobei mindestens ein Teil der Recyclingmaterialien zu einer der folgenden Familien gehört: einer ersten Familie, in der Materialien vereint sind, die mehrheitlich Polyurethan enthalten, einer zweiten Familie, in der Materialien vereint sind, die mehrheitlich Latex enthalten, einer dritten Familie, in der Materialien vereint sind, die Textilfasern enthalten und einer vierten Familie, in der Materialien vereint sind, die mehrheitlich Holz enthalten, wobei das Verfahren die folgenden Schritte umfasst:
- einen Versorgungsschritt (10) mit Recyclingmaterialien, die aus dem Möbelrecycling hervorgegangen sind, wobei dieser Recyclingmaterialien eine Ausgangsmenge mindestens einer chemischen Verbindung der folgenden Liste enthalten: VOC (flüchtige organische Verbindungen), Formaldehyd, Dimethylformamid, Chlorophnol,
- einen Zerkleinerungsschritt (20) der verschiedenen, separat behandelten Recyclingmaterialfamilien,
- einen Schritt (24) der Bildung einer nicht konsolidierten Materialmatte aus zerkleinerten Recyclingmaterialien, wobei den zerkleinerten Recyclingmaterialien vor diesem Schritt der Bildung der nicht konsolidierten Materialmatte Zweikomponentenfasern hinzugefügt werden,
- einen thermischen Behandlungsschritt (26), bei dem die zerkleinerten Recyclingmaterialien auf eine Temperatur zwischen 150 °C und 180 °C inklusive gebracht werden, was eine Konsolidierung der nicht konsolidierten Materialmatte bewirkt, wobei die zerkleinerten Recyclingmaterialien nach dem thermischen Behandlungsschritt eine abschließende Menge der chemischen Verbindung haben, die kleiner als die Ausgangsmenge ist.

2. Verfahren nach Anspruch 1, **dadurch gekennzeichnet, dass** die zerkleinerten Recyclingmaterialien während des thermischen Behandlungsschritts (26) während einer Dauer von 30 bis 60 Sekunden auf einer Temperatur zwischen 150 °C und 180 °C inklusive gehalten werden.

3. Verfahren nach Anspruch 1 oder 2, **dadurch gekennzeichnet, dass** es vor dem thermischen Behandlungsschritt einen Erwärmungsschritt (31) der zerkleinerten Materialien durch Mikrowellen umfasst.

4. Verfahren nach Anspruch 3, **dadurch gekennzeichnet, dass** die zerkleinerten Materialien während des Erwärmungsschritts durch Mikrowellen auf eine Temperatur über 70 °C erwärmt werden.

5. Verfahren nach einem der vorangehenden Ansprüche, **dadurch gekennzeichnet, dass** die Recyclingmaterialien ein Gemisch von mindestens zwei der folgenden Familien sind: der ersten Familie, in der Materialien vereint sind, die mehrheitlich Polyurethan enthalten, der zweiten Familie, in der Materialien vereint sind, die mehrheitlich Latex enthalten, der dritten Familie, in der Materialien vereint sind, die Textilfasern enthalten und der vierten Familie, in der Materialien vereint sind, die mehrheitlich Holz enthalten.

6. Verfahren nach einem der Ansprüche 1 bis 5, **dadurch gekennzeichnet, dass** die zerkleinerten Recyclingmaterialien in Schritt (24) der Bildung einer nicht konsolidierten Materialmatte gemäß dem Verfahren, das unter dem Namen Air Lay bekannt ist, von einem Luftstrom mitgenommen und verteilt und in eine Kammer verbracht werden.

7. Verfahren nach einem der vorangehenden Ansprüche, **dadurch gekennzeichnet, dass** es einen Kontrollschritt der Recyclingmaterialien umfasst, bei dem die Ausgangsmengen der chemischen Verbindungen in den Recyclingmaterialien geschätzt werden.

## Claims

1. A method for cleaning up several families of recycled materials resulting from the recycling of furniture, at least one portion of the recycled materials belongs to one of the following families:
a first family grouping materials in majority comprising polyurethane, a second family grouping materials in majority containing latex, a third family grouping materials containing textile fibers and a fourth family grouping materials in majority containing wood, the method comprising the following steps:
- a step for supplying (10) recycled materials resulting from the recycling of furniture, these recycled materials containing an initial amount of at least one chemical compound from the following list: VOCs (volatile organic compounds), formaldehyde, dimethylformamide, chlorophenol;
- a step for milling (20) the different families of recycled materials treated separately;
- a step for forming (24) a non-consolidated material layer from milled recycled materials, two-component fibers being added to the milled recycled materials before the step for forming the non-consolidated material layer,
- a heat treatment step (26), during which the milled recycled materials are brought to a temperature comprised between 150° C and 180° C having the effect of consolidating the non-consolidated material layer, the milled recycled materials at the end of the heat treatment step having a final amount of said chemical compound less than the initial amount.

2. The method according to claim 1, **characterized in that**, during the heat treatment step (26), the mill the recycled materials are maintained at a temperature comprised between 150°C and 180°C for a period from 30 to 60 seconds.

3. The method according to claim 1 or 2, **characterized in that** it comprises a step for heating (31) the milled materials with microwaves, preceding the heat treatment step.

4. The method according to claim 3, **characterized in that**, in the heating step with microwaves, the milled materials are heated to a temperature above 70°C.

5. The method according to any of the preceding claims, **characterized in that** the recycled materials are a mixture of at least two of the following families: the first family grouping materials in majority comprising polyurethane, the second family grouping materials in majority containing latex, the third family grouping materials containing textile fibers, and the fourth family grouping materials in majority containing wood.

6. The method according to one of claims 1 to 5, **characterized in that**, in the step (24) for forming the non-consolidated material layer, the milled recycled materials are carried away and dispersed by an airflow and deposited in a chamber, according to the method known as airlay.

7. The method according to any of the preceding claims, **characterized in that** it comprises a step for controlling the recycled materials, during which the initial amounts of said chemical compounds in the recycled materials are estimated.
